# FASCICULE DE BREVET EUROPEEN

(11) **EP 3 478 538 B1**
(45) Date de publication et mention de la délivrance du brevet: **13.11.2024**
(21) Numéro de dépôt: 17714850.9
(22) Date de dépôt: 09.03.2017
(51) Int. Cl.: B60R 13/08, D04H 1/542, B29C 43/20, B32B 5/18, B32B 5/22, B29B 17/00, B29C 44/08, B29C 44/12, B29K 105/04, B29K 105/12, B29K 105/26, B29L 31/30

(54) **PANNEAU DE PROTECTION ACOUSTIQUE DESTINÉ À HABILLER UNE PAROI DE VÉHICULE AUTOMOBILE**
SCHALLSCHUTZPANEEL ZUR VERKLEIDUNG EINER WAND EINES KRAFTFAHRZEUGS
SOUND PROTECTION PANEL FOR CLADDING A WALL OF AN AUTOMOTIVE VEHICLE

(30) Priorité: 01.07.2016 WO PCT/FR2016/051674
(43) Date de publication de la demande: 08.05.2019
(73) Titulaire: TREVES Products, Services & Innovation, 75008 Paris (FR)
(72) Inventeur: LEMAIRE, Dominique, 08190 Villiers devant le Thour (FR); CRIGNON, Guillaume, 51500 Sillery (FR); CAPRON, Christophe, 51490 Epoye (FR); STEIN, Jean-Christophe, 51400 Bouy (FR)
(74) Mandataire: Sayettat, Julien Christian
(86) Numéro de dépôt international: PCT/FR2017/050536
(87) Numéro de publication internationale: WO 2018/002457

(56) Documents cités:
- EP-A1- 1 847 383
- EP-A1- 1 847 383
- EP-A1- 2 502 788
- EP-A2- 2 053 593
- EP-A2- 2 053 593
- DE-B3- 102006 005 369
- DE-B3- 102006 005 369
- JP-A- H08 282 402
- JP-A- H08 282 402
- US-A1- 2013 009 087
- US-B1- 6 576 172
- US-B1- 6 576 172
- US-B2- 9 005 498

## Description

L'invention concerne un panneau de protection acoustique destiné à habiller une paroi de véhicule automobile et des procédés de réalisation d'un tel panneau.

Il est connu du document JP-H08/282402 de réaliser un panneau de protection acoustique destiné à habiller une paroi de véhicule automobile, ledit panneau comprenant, notamment de façon à former un système masse-ressort :
- une couche de ressort constituée de flocons de mousse élastiquement compressible (couche de feutre), destinée à être tournée vers la paroi,
- une couche de masse à base de polychlorure de vinyle (PVC).

Il est également connu, notamment du document EP2549474, de réaliser un tel panneau de protection acoustique comprenant :
- une couche inférieure de ressort à base de matériau élastiquement compressible, ladite couche étant destinée à être tournée vers ladite paroi,
- une couche supérieure de masse à base de flocons de mousse élastiquement compressible, lesdits flocons étant liés entre eux par un agent de liaison.

De façon avantageuse, un système masse-ressort requiert la présence d'une couche d'étanchéité entre les couches supérieure et inférieure.

Un tel système permet de réaliser une isolation acoustique qui est d'autant plus prononcée que la couche supérieure présente une masse surfacique élevée.

En outre, de par sa nature poreuse, la couche supérieure permet de réaliser une protection acoustique également par absorption, ce qui confère au panneau des propriétés de protection acoustique accentuées.

Il est notamment connu d'utiliser un agent de liaison sous forme de résine introduite sous forme liquide pour être ensuite solidifiée, ladite résine étant par exemple à base de polyuréthanne.

Or, l'utilisation d'un tel type de liant présente divers inconvénients explicités ci-après.

Dans le cas d'une couche supérieure mise en oeuvre dans un panneau pour lequel la fonction d'absorption est privilégiée par rapport à la fonction d'isolation, on cherche à minimiser le poids de ladite couche afin d'alléger ledit panneau.

Pour ce faire, on pourrait envisager de diminuer, à iso-épaisseur, la densité de la couche supérieure, de manière à baisser sa masse surfacique.

Cependant, avec une telle façon de procéder, la couche supérieure voit sa résistance au passage de l'air se dégrader, ladite couche ne présentant alors plus les propriétés d'absorption acoustique attendues.

Un but de l'invention est donc de proposer un panneau présentant une couche supérieure allégée tout en conservant sa résistance au passage de l'air, et donc ses propriétés d'absorption acoustique.

Dans ce cas d'une couche supérieure mise en oeuvre dans un panneau pour lequel les fonctions d'isolation et d'absorption doivent être traitées avec la même importance, il est connu, du document EP2549474, de conférer à ladite couche la masse surfacique attendue par adjonction d'une dispersion de particules lourdes au sein des flocons, lesdites particules étant par exemple à base d'élastomère thermoplastique, notamment d'éthylène propylène diène monomère, chargé en charge minérale.

L'ajout de particules lourdes sus-évoqué permet d'atteindre la masse surfacique attendue sans avoir à recourir à une surcharge en flocons qui aurait pour effet d'augmenter sensiblement l'épaisseur de la couche supérieure, ce qui peut être incompatibles avec l'espace disponible dans le véhicule.

Quant à la performance en absorption du panneau, elle est fonction de la résistance au passage de l'air de la couche supérieure, une bonne absorption étant réalisée par un choix pertinent de ladite résistance.

Afin de réduire le coût d'un tel panneau sans modifier la masse de la couche supérieure, de manière à garder sa performance en isolation, on pourrait envisager de maximiser le pourcentage en masse des particules lourdes dans ladite couche, lesdites particules présentant usuellement un faible coût, et de minimiser en conséquence le pourcentage en masse des flocons de mousse, qui sont plus onéreux.

Cette baisse de coût doit toutefois se faire sans modification de la résistance au passage de l'air de la couche supérieure, ceci afin de ne pas dégrader les performances du panneau en absorption acoustique.

On sait que le rapport de densité intrinsèque entre les particules lourdes et les flocons de mousse est usuellement très élevé, le ratio [densité intrinsèque des particules / densité intrinsèque des flocons] pouvant être par exemple de l'ordre de 50.

On précise ici que, dans toute cette description, quand on parle de densité intrinsèque, on considère la densité d'un flocon ou d'une particule isolés, et non la densité apparente d'un amas de flocons ou de particules.

En prenant à titre d'exemple la valeur de ratio sus évoqué, cela signifie que l'ajout d'un volume de particules lourdes doit être compensé par le retrait de cinquante volumes de flocons de mousse pour conserver la masse de la couche supérieure.

Or, on observe que la résistance au passage de l'air de la couche supérieure est essentiellement liée au volume relatif de flocons par rapport au volume de ladite couche supérieure, le volume relatif des particules denses ne jouant sur ce paramètre que de façon marginale.

Par conséquent, à iso masse surfacique, le moindre surdosage en particules lourdes, se traduit par une baisse drastique du volume relatif de flocons, ce qui entraîne une baisse conséquente de la résistance au passage de l'air de la couche supérieure, avec la dégradation qui s'ensuit en matière de performances d'absorption.

En définitive, une telle façon de procéder ne permet pas de réduire les coûts tout en conservant la résistance au passage de l'air de la couche supérieure, et donc les propriétés d'absorption acoustique du panneau.

Un autre but de l'invention est donc de proposer un panneau de moindre coût, et ceci tout en conservant la masse surfacique et la résistance au passage de l'air de la couche supérieure.

A cet effet, l'invention propose un ensemble comprenant un panneau de protection acoustique et une paroi de véhicule automobile habillée par ledit panneau, ledit panneau comprenant, notamment de façon à former un système masse-ressort :
- une couche inférieure de ressort à base de matériau élastiquement compressible, ladite couche étant tournée vers ladite paroi,
- une couche supérieure de masse à base de flocons de mousse élastiquement compressible, ladite couche étant disposée sur la couche inférieure et de façon opposée à ladite paroi, ladite couche étant pourvue d'un agent de liaison desdits flocons qui est à base de fibres bi-composant comprenant une âme, ladite âme étant fusible à haute température ou infusible, et une gaine fusible à température moindre, lesdits flocons étant liés par fusion de ladite gaine de sorte à former une couche supérieure agglomérée.

On précise ici que, pour réaliser la fusion de la gaine, on se met au-dessus de sa température de fusion et en-dessous de la température de fusion éventuelle de l'âme, cette dernière restant intacte et permettant que la couche agglomérée soit pourvue d'un réseau de fibres.

L'intérêt d'utiliser un agent liant à base de fibres bi-composant est que, en comparaison avec ce qui est observé dans le cas d'une résine introduite sous forme liquide pour être ensuite solidifiée, tous les paramètres de composition étant égaux par ailleurs, la couche supérieure présente une résistance au passage de l'air rehaussée.

La demanderesse a en effet constaté que les fibres bi-composant créent des voiles noyés dans la couche supérieure.

Selon la demanderesse, les voiles entraveraient le passage de l'air, ce qui se traduirait par l'augmentation de la résistance au passage de l'air observée.

Par conséquent, il est loisible de diminuer la masse surfacique de la couche supérieure par l'utilisation de fibres bi-composant en lieu et place d'un agent de liaison traditionnel, et ceci tout en conservant la résistance au passage de l'air de la couche supérieure.

Dans le cas d'une couche supérieure agglomérée contenant des particules lourdes dispersées, l'intérêt d'utiliser un agent liant à base de fibres bi-composant est toujours que, comme explicité ci-dessus, on augmente la résistance au passage de l'air de la couche supérieure en utilisant de telles fibres en remplacement de liants traditionnels.

A partir de ce constat, en vue de ne pas modifier la résistance au passage de l'air de la couche supérieure suite à la substitution de la résine par les fibres bi-composant, il est nécessaire de réduire la densité de ladite couche afin qu'elle fasse moins obstacle au passage de l'air, ce qui conduit à une réduction de sa masse surfacique.

Mais il en découle une dégradation des performances en isolation du panneau.

Sachant que, comme on l'a vu plus haut, le volume relatif de particules lourdes ne joue sur la résistance au passage de l'air de la couche supérieure que de façon marginale, il est loisible d'enrichir la composition de la couche supérieure avec lesdites particules pour retrouver la masse surfacique souhaitée afin que le panneau soit performant en isolation acoustique.

D'autres particularités et avantages de l'invention apparaîtront dans la description qui suit, faite en référence aux figures jointes, dans lesquelles :
- la figure 1 est une vue schématique en coupe partielle d'un panneau d'un ensemble selon une première réalisation,
- la figure 2 est une vue schématique en coupe partielle d'un panneau d'un ensemble selon une deuxième réalisation,
- la figure 3 est une vue schématique en coupe partielle d'un panneau d'un ensemble selon une troisième réalisation,
- la figure 4 est une vue schématique en coupe d'une fibre liante,
- la figure 5 représente la résistivité au passage de l'air de deux types de couches agglomérées à base de flocons de mousse élastiquement compressible, lesdits types de couches différant l'un de l'autre seulement par l'agent de liaison utilisé qui est soit sous forme de résine (R) soit sous forme de fibres bi-composant (T), ladite résistivité étant mesurée sur une pluralité d'échantillons de différentes densités,
- la figure 6 représente l'absorption acoustique en champ diffus en fonction de la fréquence, mesuré en cabine Alpha, réalisée par deux échantillons comprenant chacun une couche inférieure à base de mousse et une couche supérieure à base de flocons de mousse liés entre eux par un agent de liaison, lesdits échantillons différant l'un de l'autre seulement par l'agent de liaison utilisé qui est soit sous forme de résine (R) soit sous forme de fibres bi-composant (T).

En référence aux figures, on décrit à présent un ensemble comprenant un panneau 1 de protection acoustique et une paroi de véhicule automobile habillée par ledit panneau, ledit panneau comprenant, notamment de façon à former un système masse-ressort :
- une couche inférieure 2 de ressort à base de matériau élastiquement compressible, ladite couche étant tournée vers ladite paroi,
- une couche supérieure 3 de masse à base de flocons 4 de mousse élastiquement compressible, ladite couche étant disposée sur la couche inférieure 2 et de façon opposée à ladite paroi, ladite couche étant pourvue d'un agent de liaison desdits flocons qui est à base de fibres 5 bi-composant comprenant une âme 6, ladite âme étant fusible à haute température ou infusible, et une gaine 7 fusible à température moindre, lesdits flocons étant liés par fusion de ladite gaine de sorte à former une couche supérieure 3 agglomérée.

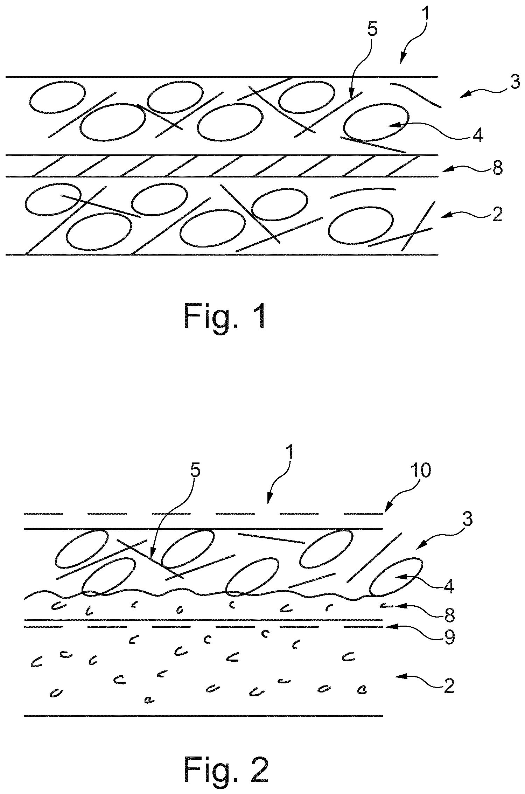

Selon une première réalisation représentée dans une réalisation particulière en figure 1, la couche inférieure 2 est à base de flocons de mousse élastiquement compressible, lesdits flocons étant liés entre eux par un agent de liaison à base de fibres 5 bi-composant de sorte à former une couche inférieure 2 agglomérée.

En effet, de façon surprenante, la demanderesse a observé que l'utilisation d'un liant à base de fibres 5 bi-composant permet de réaliser une diminution très importante de la densité de la couche inférieure 2, par rapport à des couches à base de feutre ou de mousse élastiquement compressible, et ceci tout en conservant son efficacité comme ressort dans un système d'isolation de type « masse-ressort ».

Selon un mode de réalisation, la couche inférieure 2 peut présenter une épaisseur variable pouvant varier de 40 mm, en partie non comprimée, à 5 mm, en partie fortement comprimée.

En particulier, on peut prévoir de comprimer la couche inférieure 2, par exemple en périphérie du panneau 1 ou en fonction de contraintes d'encombrement autour dudit panneau dans le véhicule.

Selon un mode de réalisation rattaché à cette première réalisation, la couche inférieure 2 présente en partie non comprimée une densité inférieure à 0,25, et notamment inférieure à 0,20, une densité aussi faible pouvant être atteinte grâce à l'utilisation des fibres 5 bi-composant, et ceci sans nuire aux performances de ladite couche comme ressort.

Selon un mode de réalisation non représenté, la couche inférieure 2 peut être recouverte d'une couche de protection sur au moins une de ses faces, cette couche pouvant être de type « Spun » polyester de 20 à 30 g/m² ou non tissé.

Une telle couche de protection peut notamment faciliter la conformation de la couche inférieure 2, notamment lors d'une étape de préchauffe, et aussi protéger ladite couche lors de la manipulation du panneau 1,

Selon un mode de réalisation rattaché à cette première réalisation, la couche inférieure 2 présente une masse surfacique inférieure à 1000 g/m², et notamment inférieure ou égale à 800 g/m², ce qui est bien moindre que les masses surfaciques usuellement connues pour des couches ressort d'épaisseur allant jusqu'à 40 mm.

Selon un mode de réalisation rattaché à cette première réalisation, les fibres 5 occupent entre 10 et 20% en poids de la couche inférieure 2, et notamment entre 13 et 17%, et notamment de l'ordre de 15%.

Selon un mode de réalisation, la couche supérieure 3 étant agglomérée, une couche d'étanchéité 8 est disposée entre ladite couche supérieure et la couche inférieure 2.

On dispose ainsi d'un système masse-ressort présentant des propriétés d'absorption grâce à la porosité de la couche supérieure 3.

Selon un mode de réalisation, la couche d'étanchéité 8 est sous forme d'un film thermoplastique, notamment d'épaisseur inférieure à 200 microns.

Selon un mode de réalisation non représenté, la couche supérieure 3 est disposée sur la couche inférieure 2 sans interposition d'une couche d'étanchéité, ladite couche supérieure présentant une résistance au passage de l'air supérieure à celle de ladite couche inférieure.

Le panneau 1 correspondant réalise alors une protection acoustique qui n'est plus basée sur un principe masse-ressort qui requiert qu'une couche d'étanchéité 8 soit interposée entre la couche supérieure 3 et la couche inférieure 2.

La protection acoustique est alors basée sur un principe de « bi-porosité » privilégiant une absorption acoustique au détriment de l'isolation réalisée quand on est dans un principe de protection acoustique de type masse-ressort.

On décrit à présent un procédé de réalisation d'un tel panneau 1, ledit procédé comprenant les étapes suivantes :
- prévoir une couche inférieure 2 élastiquement compressible, ladite couche étant à base d'un mélange de flocons 4 de mousse élastiquement compressible mélangés à des fibres 5 bi-composant, lesdits flocons étant liés entre eux par fusion de la gaine desdites fibres formant liant,
- chauffer ladite couche inférieure et la disposer dans un moule de manière à la conformer pour former couche de ressort,
- lui associer une couche supérieure 3, formant la masse, associée ou non à une couche d'étanchéité 8 disposée entre lesdites couches supérieure et inférieure.

Selon une deuxième réalisation, représentée dans une réalisation particulière en figure 2, la couche inférieure 2 pouvant ne pas être agglomérée, une couche d'étanchéité 8 est disposée entre la couche supérieure 3 et ladite couche inférieure.

Selon un mode de réalisation non représenté rattaché à cette deuxième réalisation, la couche d'étanchéité 8 est sous forme d'un film thermoplastique, notamment d'épaisseur inférieure à 200 microns.

Selon le mode de réalisation représenté en figure 2, la couche inférieure 2 est à base de mousse - notamment de polyuréthanne - surmoulant la couche supérieure 3, la couche d'étanchéité 8 étant réalisée par pénétration de ladite mousse dans une fraction de l'épaisseur de ladite couche supérieure de manière à former une croûte étanche.

Selon le mode de réalisation représenté, la couche supérieure 3 est revêtue, sur au moins sa face interne, d'un premier non tissé 9, ledit non-tissé présentant notamment une masse surfacique comprise entre 40 et 80 g/m².

Le premier non-tissé 9 permet notamment de limiter la pénétration de la mousse dans la couche supérieure 3 de manière à conserver son caractère poreux sur une fraction aussi grande que possible de son épaisseur, ceci afin de préserver ses propriétés d'absorption.

Dans la réalisation représentée, la couche supérieure 3 est aussi revêtue, sur sa face externe, d'un deuxième non-tissé 10, ledit non-tissé, présentant notamment une masse surfacique comprise entre 40 et 60 g/m², qui a notamment pour fonction d'éviter un collage de la couche supérieure 3 contre un outillage servant à la pré-comprimer et/ou la thermoformer.

Selon un mode de réalisation non représenté rattaché à cette deuxième réalisation, la couche supérieure 3 est disposée sur la couche inférieure 2, qui peut être agglomérée, sans interposition d'une couche d'étanchéité, ladite couche supérieure présentant une résistance au passage de l'air supérieure à celle de ladite couche inférieure.

Le panneau 1 correspondant réalise alors une protection acoustique qui n'est plus basée sur un principe masse-ressort qui requiert que la couche supérieure 3 soit étanche ou bien qu'une couche d'étanchéité 8 soit interposée entre ladite couche supérieure et la couche inférieure 2.

La protection acoustique est alors basée sur un principe de « bi-porosité » privilégiant une absorption acoustique au détriment de l'isolation réalisée quand on est dans un principe de protection acoustique de type masse-ressort.

On décrit à présent, dans ce cas d'une couche d'étanchéité 8 résultant d'une pénétration partielle de la couche supérieure 3 par la mousse de la couche inférieure 2, un procédé de réalisation d'un panneau 1, ledit procédé comprenant les étapes suivantes :
- déverser sur un support un mélange de flocons 4 de mousse et de fibres 5 bi-composant, de manière à former un matelas non lié,
- recouvrir ledit matelas par un premier non-tissé 9,
- faire une pré-compression à chaud de l'ensemble de manière à former une plaque pré-liée,
- thermoformer ladite plaque de manière à réaliser une couche supérieure 3 tridimensionnelle,
- disposer ladite couche dans un moule et surmouler sa face pourvue dudit premier non-tissé par de la mousse élastiquement compressible de manière à former une couche inférieure 2 dont la mousse pénètre partiellement ladite couche supérieure en créant une couche d'étanchéité 8,
- démouler le panneau 1 obtenu.

On peut aussi prévoir de disposer sur le matelas un deuxième non-tissé 10 sur la face dudit matelas opposée à celle recevant le premier non-tissé 9.

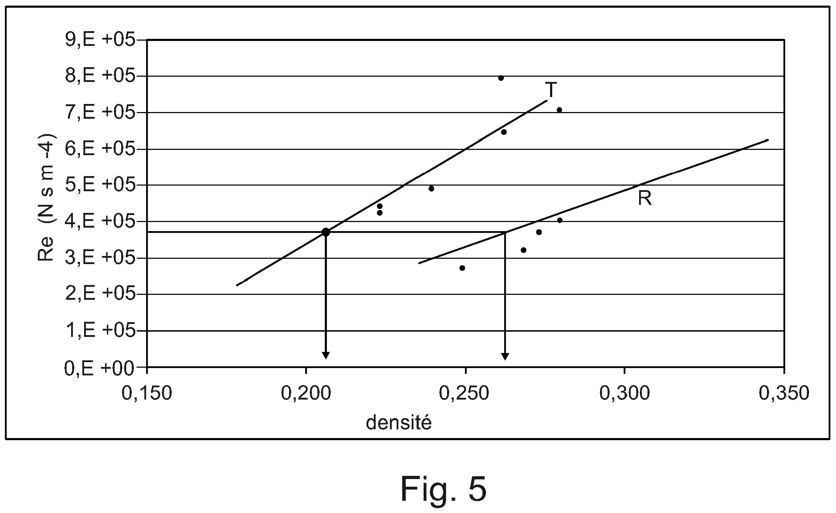

Comme on peut le constater sur la figure 5, le remplacement d'un agent de liaison sous forme de résine par un agent sous forme de fibres 5 bi-composant, tous les autres paramètres restant inchangés, conduit à une augmentation sensible de la résistivité au passage de l'air de la couche supérieure 3, et ce quelle que soit sa densité.

On précise ici que c'est la résistivité au passage de l'air (N.s.m⁻⁴) qui est exprimée, et non la résistance au passage de l'air (N.s.m⁻³), ceci pour s'affranchir de l'épaisseur des échantillons, sachant que l'un ou l'autre peuvent être utilisés indifféremment pour comparer deux échantillons de même épaisseur.

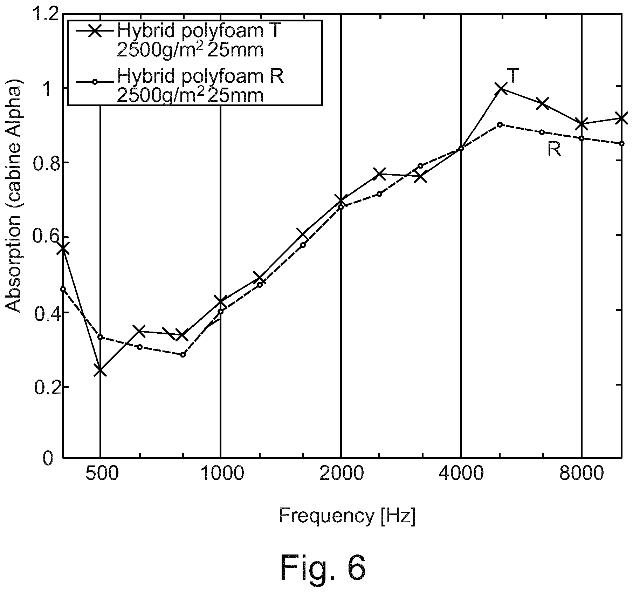

On effectue à présent, en référence à la figure 6, une comparaison, sur une plage de fréquence, du coefficient d'absorption en champ diffus, mesuré en cabine Alpha, de deux échantillons comprenant chacun une couche inférieure 2 à base de mousse et une couche supérieure 3 à base de flocons de mousse liés entre eux par un agent de liaison.

Les échantillons sont analogues et ne diffèrent que par l'agent de liaison qui est sous forme de résine pour le premier échantillon (R) et sous forme de fibres bi-composant telles que précédemment décrites pour le deuxième échantillon (T).

Les deux échantillons présentent chacun une épaisseur totale de 25 mm, la couche supérieure 3 présentant une épaisseur de 8 mm pour chacun d'eux.

Pour les deux échantillons, la couche inférieure 2 surmoule la couche supérieure 3 de manière à former une couche d'étanchéité 8 réalisée par pénétration de ladite mousse dans une fraction de l'épaisseur de ladite couche supérieure.

On observe, sur une plage de fréquence s'étendant de 800 à plus de 8000 Hz, que le coefficient d'absorption du deuxième échantillon (T) est généralement supérieur à celui du premier échantillon (R), et ceci plus particulièrement pour les fréquences supérieures à 4000 Hz.

La figure 6 illustre ainsi le fait que l'emploi d'un agent de liaison sous forme de fibres bi-composant, en lieu et place d'un agent sous forme de résine, conduit à une amélioration des propriétés d'absorption de la couche supérieure 3.

Une telle amélioration s'expliquerait, comme expliqué précédemment, par le fait que les fibres bi-composant créent des voiles noyés dans la couche supérieure, lesdits voiles ayant pour effet d'augmenter la résistivité, ou résistance, au passage de l'air, et donc les propriétés d'absorption.

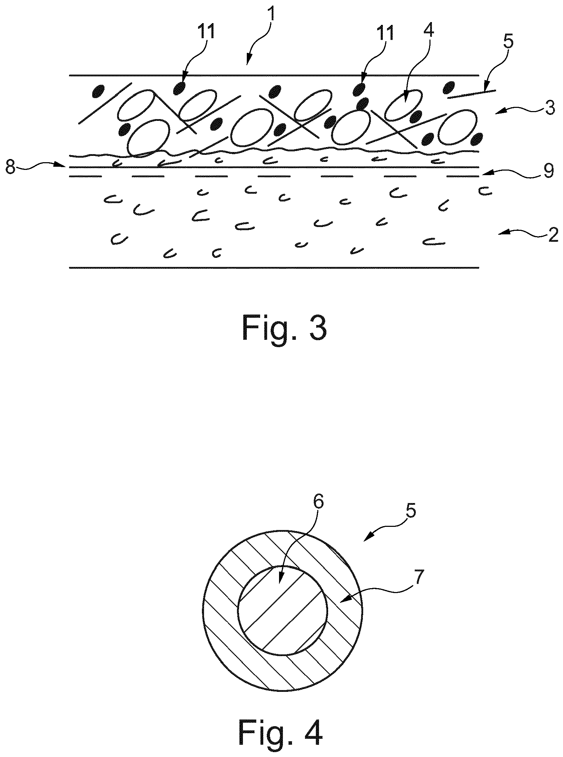

Selon une troisième réalisation, représentée dans une réalisation particulière en figure 3, la couche supérieure 3 comprend en outre une dispersion de particules lourdes 11 de densité intrinsèque supérieure à celle des flocons, lesdites particules étant liés avec les flocons 4 par fusion de la gaine 7.

Les particules lourdes 11 peuvent notamment être issues de broyage de chutes de production de tapis automobiles.

A ce titre, elles peuvent notamment être à base d'élastomère thermoplastique - notamment d'éthylène propylène diène monomère - chargé en charge minérale - par exemple en baryte ou en carbonate de calcium - et contenir en outre de la poussière de fibres issues de la face d'aspect desdits tapis.

La densité intrinsèque des particules 11 peut notamment être comprise entre 1 et 2,5.

Les particules 11 peuvent notamment présenter une densité intrinsèque de 20 à 60 plus importante que celle des flocons 4.

La taille des particules lourdes 11 peut notamment être comprise entre 5 et 10 mm, ceci afin de permettre leur dispersion optimale au sein de la couche supérieure 3.

Selon un mode de réalisation rattaché à cette troisième réalisation, le pourcentage en masse des particules lourdes 11 est compris entre 20 et 40% de la masse de la couche supérieure 3.

Selon un mode de réalisation rattaché à cette troisième réalisation, le pourcentage en masse des fibres 5 bi-composant est compris entre 15 et 30% de la masse de la couche supérieure 3.

Selon un mode de réalisation rattaché à cette troisième réalisation, le pourcentage en masse des flocons 4 est compris entre 40 et 65% de la masse de la couche supérieure 3.

Comme représenté sur la figure 3, une couche d'étanchéité 8 est disposée entre la couche supérieure 3 et la couche inférieure 2.

Selon un mode de réalisation non représenté rattaché à cette troisième réalisation, la couche d'étanchéité 8 est sous forme d'un film thermoplastique notamment d'épaisseur inférieure à 200 microns.

Selon un mode de réalisation non représenté rattaché à cette troisième réalisation, la couche inférieure 2 est agglomérée.

Selon le mode de réalisation représenté en figure 3, la couche inférieure 2 est à base de mousse - notamment de polyuréthanne - surmoulant la couche supérieure 3, la couche d'étanchéité 8 étant réalisée par pénétration de ladite mousse dans une fraction de l'épaisseur de ladite couche supérieure de manière à former une croûte étanche.

Selon le mode de réalisation représenté, la couche supérieure 3 est revêtue, sur au moins sa face interne, d'un premier non tissé 9, ledit non-tissé présentant notamment une masse surfacique comprise entre 40 et 80 g/m².

Le premier non-tissé 9 permet notamment de limiter la pénétration de la mousse dans la couche supérieure 3 de manière à conserver son caractère poreux sur une fraction aussi grande que possible de son épaisseur, ceci afin de préserver ses propriétés d'absorption.

Selon un mode de réalisation non représenté rattaché à cette troisième réalisation, la couche supérieure 3 est disposée sur une couche inférieure 2 poreuse sans interposition d'une couche d'étanchéité, ladite couche supérieure présentant une résistance au passage de l'air supérieure à celle de ladite couche inférieure.

Le panneau 1 correspondant réalise alors une protection acoustique qui n'est plus basée sur un principe masse-ressort qui requiert que la couche supérieure 3 soit étanche ou bien qu'une couche d'étanchéité 8 soit interposée entre ladite couche supérieure et la couche inférieure 2.

La protection acoustique est alors basée sur un principe de « bi-porosité » privilégiant une absorption acoustique au détriment de l'isolation réalisée quand on est dans un principe de de protection acoustique de type masse-ressort.

On décrit à présent, dans ce cas d'une couche d'étanchéité 8 résultant d'une pénétration partielle de la couche supérieure 3 par la mousse de la couche inférieure 2, un procédé de réalisation d'un panneau 1, ledit procédé comprenant les étapes suivantes :
- déverser sur un support un mélange de flocons 4 de mousse, de fibres 5 bi-composant et de particules lourdes 11, de manière à former un matelas non lié,
- recouvrir ledit matelas par un premier non-tissé 9,
- faire une pré-compression à chaud de l'ensemble de manière à former une plaque pré-liée,
- thermoformer ladite plaque de manière à réaliser une couche supérieure 3 tridimensionnelle,
- disposer ladite couche dans un moule et surmouler sa face pourvue dudit premier non-tissé par de la mousse élastiquement compressible de manière à former une couche inférieure 2 dont la mousse pénètre partiellement ladite couche supérieure en créant une couche d'étanchéité 8,
- démouler le panneau 1 obtenu.

Selon un mode de réalisation rattaché à toutes les réalisations présentées ci-dessus, les flocons 4 sont issus de recyclage.

Selon un mode de réalisation rattaché à toutes les réalisations présentées ci-dessus, les flocons 4 sont à base de polyuréthanne.

Selon un mode de réalisation rattaché à toutes les réalisations présentées ci-dessus, la taille des flocons 4 est comprise entre 5 et 15 mm, ceci afin de permettre leur dispersion optimale au sein de la couche agglomérée.

Selon un mode de réalisation rattaché à toutes les réalisations présentées ci-dessus, les fibres 5 bi-composant sont à base de polyéthylène téréphtalate (PET).

En particulier, l'âme 6 peut être à base de polyester et la gaine 7 à base de co-polyester.

Selon un mode de réalisation rattaché à toutes les réalisations présentées ci-dessus, les fibres 5 peuvent présenter un titre compris entre 1,7 et 6 dtex, et notamment de l'ordre de 4,4 dtex, sachant que l'utilisation de fibres fines conduit à accroître la résistance au passage de l'air, et donc à améliorer les propriétés d'absorption de la couche supérieure 3.

Selon un mode de réalisation rattaché à toutes les réalisations présentées ci-dessus, déjà explicité pour la deuxième réalisation, la couche supérieure 3 peut être revêtue, sur sa face externe, d'un deuxième non-tissé 10.

Le deuxième non tissé 10, peut notamment présenter une masse surfacique comprise entre 40 et 60 g/m², ayant pour fonction d'éviter un collage de la couche supérieure 3 contre un outillage servant à la pré-comprimer et/ou la thermoformer.

Selon un mode de réalisation rattaché à toutes les réalisations présentées ci-dessus, le deuxième non-tissé 10 peut présenter une résistance au passage de l'air comprise entre 200 et 1800 N.s.m⁻¹, de manière à être résistif.

L'utilisation d'un tel non tissé 10 résistif permet l'emploi d'une couche supérieure 3 de masse surfacique minimisée, par exemple de l'ordre de 1000 g/m², la diminution de résistance au passage de l'air de ladite couche résultant de la minimisation de sa masse surfacique étant compensée par ledit non tissé qui contribue à rehausser la résistance au passage de l'air de l'ensemble.

Selon un mode de réalisation rattaché à toutes les réalisations présentées ci-dessus, le pourcentage en masse des fibres 5 bi-composant dans la couche supérieure 3 est compris entre 15 et 30% de la masse de ladite couche, le complément de masse étant apporté par les flocons 4 et éventuellement par les particules lourdes 11, comme explicité plus haut.

Selon un mode de réalisation rattaché à toutes les réalisations présentées ci-dessus, la couche supérieure 3 présente un module de Young, mesuré selon une direction correspondant à l'épaisseur de ladite couche, supérieur à 1 MPa.

Selon un mode de réalisation applicable à toutes les réalisations présentées ci-dessus, la couche supérieure 3 présente une masse surfacique comprise entre 0,7 et 5 kg/m².

## Revendications

1. Ensemble comprenant un panneau (1) de protection acoustique et une paroi (12) de véhicule automobile habillée par ledit panneau, ledit panneau comprenant, notamment de façon à former un système masse-ressort :
• une couche inférieure de ressort (2) à base de matériau élastiquement compressible, ladite couche étant tournée vers ladite paroi,
• une couche supérieure de masse (3) à base de flocons (4) de mousse élastiquement compressible, lesdits flocons étant liés entre eux par un agent de liaison, ladite couche étant disposée sur la couche inférieure 2 et de façon opposée à ladite paroi,
ledit ensemble étant **caractérisé en ce que** ledit agent de liaison est à base de fibres (5) bi-composant comprenant une âme (6), ladite âme étant fusible à haute température ou infusible, et une gaine (7) fusible à température moindre, lesdits flocons étant liés par fusion de ladite gaine de sorte à former une couche supérieure (3) agglomérée.

2. Ensemble selon la revendication 1, **caractérisé en ce que** la couche supérieure (3) est disposée sur la couche inférieure (2) sans interposition d'une couche d'étanchéité, ladite couche supérieure présentant une résistance au passage de l'air supérieure à celle de ladite couche inférieure.

3. Ensemble selon la revendication 1, **caractérisé en ce qu'**une couche d'étanchéité (8) est disposée entre la couche supérieure (3) et la couche inférieure (2).

4. Ensemble selon la revendication 3, **caractérisé en ce que** la couche d'étanchéité (8) est sous forme d'un film thermoplastique d'épaisseur inférieure à 200 microns.

5. Ensemble selon la revendication 3, **caractérisé en ce que** la couche inférieure (2) est à base de mousse surmoulant la couche supérieure (3), la couche d'étanchéité (8) étant réalisée par pénétration de ladite mousse dans une fraction de l'épaisseur de ladite couche supérieure de manière à former une croûte étanche.

6. Ensemble selon l'une quelconque des revendications 1 à 4, **caractérisé en ce que** la couche inférieure (2) est à base de flocons de mousse élastiquement compressible, lesdits flocons étant liés entre eux par un agent de liaison à base de fibres (5) bi-composant de sorte à former une couche inférieure (2) agglomérée.

7. Ensemble selon l'une quelconque des revendications 1 à 6, **caractérisé en ce que** la couche supérieure (3) comprend en outre une dispersion de particules lourdes (11) de densité intrinsèque supérieure à celle des flocons (4), lesdites particules étant liés avec lesdits flocons par fusion de la gaine (7).

8. Ensemble selon la revendication 7, **caractérisé en ce que** le pourcentage en masse des particules lourdes (11) est compris entre 20 et 40% de la masse de la couche supérieure (3).

9. Ensemble selon l'une quelconque des revendications 1 à 8, **caractérisé en ce que** le pourcentage en masse des fibres (5) bi-composant dans la couche supérieure (3) est compris entre 15 et 30% de la masse de ladite couche.

## Patentansprüche

1. Anordnung, die ein Lärmschutzpaneel (1) und eine Kraftfahrzeugwand (12), die mit dem Paneel verkleidet ist, umfasst, wobei das Paneel Folgendes umfasst, um insbesondere ein Masse-Feder-System zu bilden:
• eine untere Federschicht (2) auf der Basis von elastisch komprimierbarem Material, wobei die Schicht der Wand zugewandt ist,
• eine obere Massenschicht (3) auf der Basis von Flocken (4) aus elastisch komprimierbarem Schaumstoff, wobei die Flocken durch ein Bindemittel miteinander verbunden werden, wobei die Schicht auf der unteren Schicht (2) und gegenüber der Wand angeordnet ist,
wobei die Anordnung **dadurch gekennzeichnet ist, dass** das Bindemittel auf Zweikomponentenfasern (5) basiert, die einen Kern (6), wobei der Kern bei hoher Temperatur schmelzbar oder unschmelzbar ist, und eine Hülle (7) umfassen, die bei niedrigerer Temperatur schmelzbar ist, wobei die Flocken durch Schmelzen der Hülle so verbunden werden, dass sie eine agglomerierte obere Schicht (3) bilden.

2. Anordnung nach Anspruch 1, **dadurch gekennzeichnet, dass** die obere Schicht (3) auf der unteren Schicht (2) ohne eine dazwischen positionierten Dichtungsschicht angeordnet ist, wobei die obere Schicht einen größeren Luftdurchlässigkeitswiderstand aufweist als die untere Schicht.

3. Anordnung nach Anspruch 1, **dadurch gekennzeichnet, dass** zwischen der oberen Schicht (3) und der unteren Schicht (2) eine Dichtungsschicht (8) angeordnet ist.

4. Anordnung nach Anspruch 3, **dadurch gekennzeichnet, dass** die Dichtungsschicht (8) in Form einer thermoplastischen Folie mit einer Dicke von weniger als 200 Mikrometer vorliegt.

5. Anordnung nach Anspruch 3, **dadurch gekennzeichnet, dass** die untere Schicht (2) auf Schaum basiert, der die obere Schicht (3) überformt, wobei die Dichtungsschicht (8) durch Eindringen des Schaums in einen Teil der Dicke der oberen Schicht so erzeugt wird, dass sie eine wasserdichte Schale bildet.

6. Anordnung nach einem der Ansprüche 1 bis 4, **dadurch gekennzeichnet, dass** die untere Schicht (2) auf Flocken aus elastisch komprimierbarem Schaumstoff basiert, wobei die Flocken durch ein Zweikomponenten-Bindemittel auf Faserbasis (5) so miteinander verbunden werden, dass sie eine agglomerierte untere Schicht (2) bilden.

7. Anordnung nach einem der Ansprüche 1 bis 6, **dadurch gekennzeichnet, dass** die obere Schicht (3) ferner eine Dispersion aus schweren Partikeln (11) mit einer höheren intrinsischen Dichte als die der Flocken (4) umfasst, wobei die Partikel durch Schmelzen der Hülle (7) mit den Flocken verbunden werden.

8. Anordnung nach Anspruch 7, **dadurch gekennzeichnet, dass** der Massenanteil der schweren Partikel (11) zwischen 20 und 40 % der Masse der oberen Schicht (3) beträgt.

9. Anordnung nach einem der Ansprüche 1 bis 8, **dadurch gekennzeichnet, dass** der Massenanteil der Zweikomponentenfasern (5) in der oberen Schicht (3) zwischen 15 und 30 % der Masse der Schicht beträgt.

## Claims

1. Assembly comprising an acoustic protection panel (1) and a motor vehicle wall (12) covered by said panel, said panel comprising, in particular to form a spring mass system:
• a lower spring layer (2) made from resiliently compressible material, said layer being turned towards said wall,
• an upper mass layer (3) made from flakes (4) of resiliently compressible foam, said flakes being bonded together by a bonding agent, said layer being disposed on the lower layer (2) and opposite said wall,
said assembly being **characterised in that** said bonding agent is made from bi-component fibres (5) comprising a core (6), said core being fusible at a high temperature or non-fusible, and a sheath (7) fusible at a lower temperature, said flakes being bonded by the fusion of said sheath so as to form an agglomerated upper layer (3).

2. Assembly according to claim 1, **characterised in that** the upper layer (3) is disposed on the lower layer (2) without the interposition of a sealing layer, said upper layer having a resistance to the passage of air which is greater than that of said lower layer.

3. Assembly according to claim 1, **characterised in that** a sealing layer (8) is arranged between the upper layer (3) and the lower layer (2).

4. Assembly according to claim 3, **characterised in that** the sealing layer (8) is in the form of a thermoplastic film, having a thickness of less than 200 microns.

5. Assembly according to claim 3, **characterised in that** the lower layer (2) is made from foam moulding over the upper layer (3), the sealing layer (8) being formed by the penetration of said foam in a portion of the thickness of said upper layer so as to form a sealing crust.

6. Assembly according to any of claims 1 to 4, **characterised in that** the lower layer (2) is made from resiliently compressible foam flakes, said flakes being bonded together by a bonding agent made from bi-component fibres (5) so as to form an agglomerated lower layer (2).

7. Assembly according to any of claims 1 to 6, **characterised in that** the upper layer (3) also comprises a dispersion of heavy particles (11) with an intrinsic density greater than that of the flakes (4), said particles being bonded to said flakes by the fusion of the sheath (7) .

8. Assembly according to claim 7, **characterised in that** the percentage by mass of heavy particles (11) is between 20 and 40% of the mass of the upper layer (3).

9. Assembly according to any of claims 1 to 8, **characterised in that** the percentage by mass of bi-component fibres (5) in the upper layer (3) is between 15 and 30% of the mass of said layer.
